# EUROPÄISCHE PATENTSCHRIFT

(11) **EP 3 774 399 B1**
(45) Veröffentlichungstag und Bekanntmachung des Hinweises auf die Patenterteilung: **06.07.2022**
(21) Anmeldenummer: 19715436.2
(22) Anmeldetag: 28.03.2019
(51) Int. Cl.: B60C 19/00, B60C 23/04, B60W 40/064

(54) **VERFAHREN ZUR DYNAMISCHEN ERMITTLUNG EINER REIFENLÄNGSKRAFT**
METHOD FOR DYNAMICALLY EVALUATING THE LONGITUDINAL FORCE AT THE TIRE
MÉTHODE D'ÉVALUATION DYNAMIQUE DE LA FORCE LONGITUDINALE EXERCÉE SUR LE PNEUMATIQUE

(30) Priorität: 29.03.2018 DE 102018204893
(43) Veröffentlichungstag der Anmeldung: 17.02.2021
(73) Patentinhaber: Deere & Company, Moline, IL 61265-8098 (US)
(72) Erfinder: SCHOTT, Florian, 68163 Mannheim (DE); FRITZ DR., Norbert, 68163 Mannheim (DE)
(74) Vertreter: Dehnhardt, Florian Christopher
(86) Internationale Anmeldenummer: PCT/EP2019/057848
(87) Internationale Veröffentlichungsnummer: WO 2019/185788

(56) Entgegenhaltungen:
- EP-A1- 3 153 374
- EP-A1- 3 153 375
- DE-A1-102007 062 203

## Beschreibung

Die Erfindung betrifft ein Verfahren zur dynamischen Ermittlung einer Reifenlängskraft.

Herkömmliche Verfahren zur Ermittlung der im Kontaktbereich zwischen Reifen und Untergrund auftretenden Reifenlängskraft beruhen meist auf einer Bewertung der in einem Antriebsstrang auftretenden Drehmomentverhältnisse. Eine derartige Bewertung ist aufwändig und ausschließlich im Zusammenhang mit angetriebenen Rädern möglich.

Des Weiteren ist aus der EP 3 153 374 A1 wie auch der EP 3 153 375 A1 ein jeweiliges Verfahren zur Schätzung einer auf einen Fahrzeugreifen wirkenden Längskraft bekannt, bei dem die Längskraft ausgehend von einem dynamischen Reifenmodell auf Grundlage sensorbasiert abgeleiteter Größen in Form einer Radwinkelgeschwindigkeit sowie eines Antriebs- bzw. Bremsmoments abgeschätzt wird.

Die DE 10 2007 062 203 A1 zeigt ferner ein Verfahren zur Ermittlung eines Reibwerts zwischen einem Kraftfahrzeugreifen und einer Fahrbahnoberfläche während einer Beschleunigung des Kraftfahrzeugs, bei dem unter anderem eine an dem Kraftfahrzeugreifen wirkende Längskraft nach Maßgabe einer berechneten Antriebskraft bestimmt wird. Die Berechnung der Antriebskraft erfolgt hierbei ausgehend von einer um Gravitations- und Nickeinflüsse des Kraftfahrzeuges bereinigten effektiven Fahrzeugbeschleunigung. Letztere wird auf sensorischem Wege gewonnen.

Es ist Aufgabe der vorliegenden Erfindung, ein Verfahren der eingangs genannten Art anzugeben, das eine einfach durchzuführende Ermittlung der Reifenlängskraft sowohl an angetriebenen wie auch frei laufenden Rädern eines Fahrzeugs erlaubt.

Diese Aufgabe wird durch ein Verfahren mit den Merkmalen des Patentanspruchs 1 gelöst.

Bei dem Verfahren zur dynamischen Ermittlung einer Reifenlängskraft wird mittels eines in einem Reifenwulst angeordneten Beschleunigungsaufnehmers eine Reifenbeschleunigungsgröße ermittelt, die eine innerhalb des Reifenwulsts auftretende Beschleunigung charakterisiert, wobei ausgehend von der ermittelten Reifenbeschleunigungsgröße mittels einer Prozessoreinheit ein erster Zeit- oder Winkelabstand zwischen einem Reifenlatscheintrittspunkt und einem Beschleunigungsscheitelpunkt und ein zweiter Zeit- oder Winkelabstand zwischen dem Beschleunigungsscheitelpunkt und einem Reifenlatschaustrittspunkt bestimmt wird, wobei von der Prozessoreinheit aus einer zwischen den beiden Zeit- oder Winkelabständen erfassten Symmetrieverschiebung auf Betrag und/oder Richtung einer eine Reifenlängskraft charakterisierenden Reifenlängskraftgröße geschlossen wird.

Das erfindungsgemäße Verfahren macht sich den Umstand zunutze, dass luftgefüllte Reifen den Untergrund nicht etwa in einer Linie berühren, wie es bei einem starren Zylinder der Fall wäre, sondern im Bereich einer kompressionsbedingt auftretenden Kontaktfläche, dem sogenannten Reifenlatsch. Hierbei erfolgt im Reifenlatsch die Übertragung der in Längs- und Querrichtung wirkenden Reifenkräfte auf den Untergrund. Beim rotationsbedingten Durchlaufen des Reifenlatschs verringert sich der Reifenradius in einem Reifenlatscheintrittspunkt, bevor dieser am Ende des Reifenlatschs in einem Reifenlatschaustrittspunkt wieder seinen ursprünglichen Nennradius annimmt. Dies verursacht umfangsmäßig wirkende (tangentiale) Kräfte im Reifenlatsch. Erfindungsgemäß wurde erkannt, dass umgekehrt eine von außen aufgeprägte Veränderung dieser Kräfte zu einem bezüglich der Symmetrie der beiden Zeit-oder Winkelabstände verschobenen Reifenlatsch führt. Eine derartige Veränderung der Kräfteverhältnisse tritt beispielsweise beim Beschleunigen oder Verzögern des Rads wie auch aufgrund des Rollwiderstands zwischen Reifenlatsch und Untergrund auf.

Die von der Prozessoreinheit auf Grundlage der Reifenbeschleunigungsgröße dynamisch, d.h. durch Auswertung des dynamischen Verhaltens des Reifens bzw. Reifenlatschs ermittelte Reifenlängskraftgröße ist daher im Allgemeinen durch am Reifen auftretende Antriebs- und Bremskräfte sowie dessen Rollwiderstand charakterisiert. Letzterer äußert sich in einer entsprechenden Rollwiderstandskraft, die sich ebenfalls in der zu ermittelnden Reifenlängskraftgröße manifestiert.

Die Erfassung der Symmetrieverschiebung erfolgt durch Vergleich der beiden zeitlichen Abstände oder aber der beiden Winkelabstände. Letzteres hat den Vorteil, dass die Symmetrieverschiebung nicht von der Reifenumfangsgeschwindigkeit abhängt. Je nach Richtung bzw. Vorzeichen der erfassten Symmetrieverschiebung lässt sich unmittelbar auf das Vorliegen von beschleunigenden bzw. verzögernden Kräften am Reifen schließen.

Weitere vorteilhafte Ausgestaltungen des erfindungsgemäßen Verfahrens gehen aus den Unteransprüchen hervor.

Typischerweise wird die Reifenlängskraftgröße von der Prozessoreinheit auf Grundlage einer für den verwendeten Reifentyp spezifischen Zuordnungstabelle ermittelt, wobei in der Zuordnungstabelle eine Vielzahl vorgegebener Werte für die Symmetrieverschiebung empirisch mit jeweils korrespondierenden Werten für die Reifenlängskraftgröße verknüpft sein kann. Zur Verbesserung der Datenqualität ist es denkbar, dass die Zuordnungstabelle von der Prozessoreinheit in Abhängigkeit von Informationen hinsichtlich des Fülldrucks des Reifens und/oder der Reifentemperatur modifiziert wird. Denn diese beiden Größen haben ihrerseits unmittelbaren Einfluss auf die Ausbildung des Reifenlatschs.

Wie bereits eingangs erwähnt, enthält die ermittelte Reifenlängskraftgröße im Allgemeinen sowohl Anteile hinsichtlich eines beim Abrollen des Reifens auftretenden Rollwiderstands als auch solche, die auf Antriebs- oder Bremskräfte des Fahrzeugs zurückgehen. Um insofern eine eindeutige Zuordnung treffen zu können, kann zunächst zur Identifizierung des Rollwiderstands eine entsprechende Reifenrollwiderstandsgröße bestimmt werden. Deren Bestimmung wird von der Prozessoreinheit auf Grundlage der in einem antriebs- bzw. bremskraftfreien Fahrtzustand ermittelten Reifenlängskraftgröße durchgeführt. Ob sich das Fahrzeug in einem solchen Fahrtzustand befindet, kann von der Prozessoreinheit unschwer aus dem Betriebsstatus eines zugehörigen Antriebs- bzw. Bremssystems abgeleitet werden.

Hierbei kann die Ermittlung der Reifenrollwiderstandsgröße von der Prozessoreinheit jedes Mal bei Erkennung eines derartigen antriebs- bzw. bremskraftfreien Fahrtzustands durchgeführt werden, sodass stets ein hinsichtlich der jeweiligen Untergrundbeschaffenheit aktueller Wert zur Verfügung gestellt wird.

Die Reifenbeschleunigungsgröße kann von Seiten des Beschleunigungsaufnehmers insbesondere durch eine im Reifenlatsch tangential oder radial wirkende Beschleunigung charakterisiert werden. Auch ist es vorstellbar, dass von der Prozessoreinheit eine Variation der Reifenumfangsgeschwindigkeit aufgrund der beim rotationsbedingten Durchlaufen des Reifenlatschs verursachten Radiusänderung ausgewertet und zur Charakterisierung der Reifenbeschleunigungsgröße herangezogen wird. Hierzu kann eine von dem Beschleunigungsaufnehmer umfasste inertiale Messeinheit dienen.

Des Weiteren kann die Reifenbeschleunigungsgröße der Prozessoreinheit seitens des Beschleunigungsaufnehmers drahtlos zur Verfügung gestellt werden. Daneben können Informationen hinsichtlich des Reifentyps wie auch des Fülldrucks des Reifens und/oder der Reifentemperatur mitübermittelt werden, um diese zur Auswahl der für den verwendeten Reifentyp spezifischen Zuordnungstabelle bzw. zu deren Modifikation heranzuziehen. Die drahtlose Übertragung kann mittels eines Bluetooth- oder RFID-Transponders erfolgen. Die Angaben hinsichtlich des Reifentyps sind dabei in einer in dem Bluetooth- oder RFID-Transponder zugeordneten Speichereinheit hinterlegt, wohingegen Fülldruck und/oder Reifentemperatur sensorisch bereitgestellt werden.

Das erfindungsgemäße Verfahren wird im Folgenden anhand der beigefügten Zeichnungen näher erläutert. Hierbei sind übereinstimmende oder bezüglich ihrer Funktion vergleichbare Komponenten mit denselben Bezugszeichen gekennzeichnet. Es zeigen:
- Fig. 1: eine beispielhaft dargestellte Fahrzeugumgebung, in der das erfindungsgemäßen Verfahren ausgeführt wird,
- Fig. 2: eine Veranschaulichung eines an einem frei laufenden Rad auftretenden Reifenlatschs,
- Fig. 3: eine Veranschaulichung eines unter der zusätzlichen Wirkung einer beschleunigenden Antriebskraft auftretenden Reifenlatschs, und
- Fig. 4: ein Ausführungsbeispiel des erfindungsgemäßen Verfahrens in Gestalt eines Flussdiagramms.

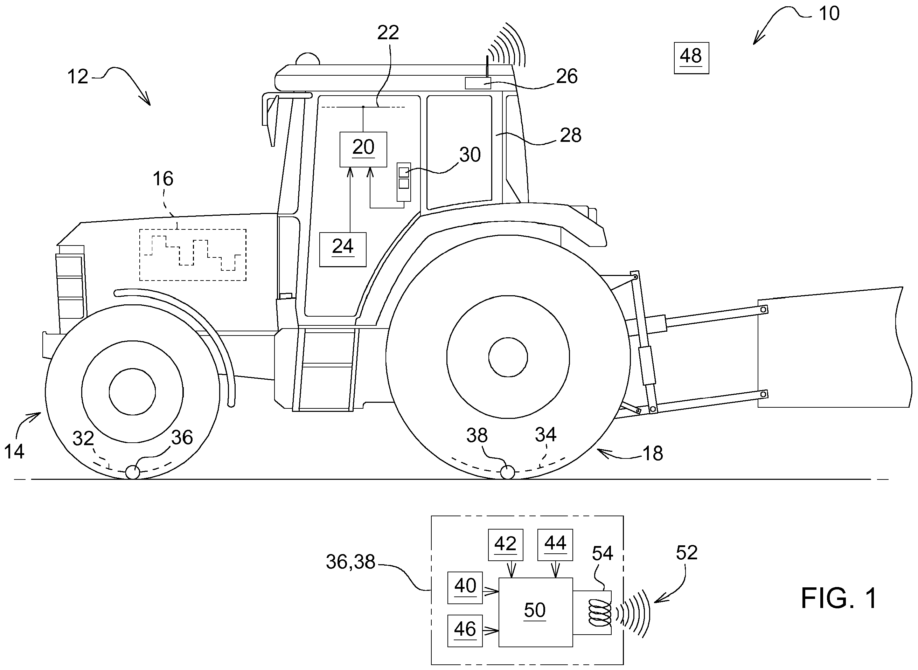

Fig. 1 zeigt eine beispielhaft dargestellte Fahrzeugumgebung, in der das erfindungsgemäße Verfahren zur dynamischen Ermittlung einer Reifenlängskraft ausgeführt wird.

Bei der in Fig. 1 schematisch dargestellten Fahrzeugumgebung 10 handelt es sich um einen landwirtschaftlichen Traktor 12 mit lenkbaren Vorderrädern 14 sowie mittels eines Verbrennungsmotors 16 angetriebenen Hinterrädern 18. Die Vorderräder 14 sind im vorliegenden Fall frei laufend ausgebildet, alternativ können diese jedoch auch über ein MFWD-Getriebe (MFWD - Mechanical Front Wheel Drive) mit dem Verbrennungsmotor 16 des landwirtschaftlichen Traktors 12 antriebsverbindbar sein.

Des Weiteren ist eine Prozessoreinheit 20 vorhanden, die Bestandteil einer lediglich durch einen CAN-Datenbus 22 angedeuteten Steuergerätearchitektur des landwirtschaftlichen Traktors 12 ist. Die Prozessoreinheit 20 steht mit einem Bluetooth- oder RFID-Empfänger 24, einer WLAN-Schnittstelle 26 sowie einer in einer Fahrerkabine 28 untergebrachten Bedieneinheit 30 in Verbindung.

Eine in einen jeweiligen Reifenwulst 32, 34 der Hinter- bzw. Vorderräder 14, 18 eingebettete Datenerfassungseinheit 36, 38 weist jeweils einen Beschleunigungsaufnehmer 40, einen Fülldrucksensor 42 sowie einen Temperatursensor 44 auf. Zusätzlich ist eine Speichereinheit 46 vorhanden, in der Angaben zum Reifentyp hinterlegt sind. Alternativ können diese auch über die WLAN-Schnittstelle 26 in einem zentralen Datenserver 48 abgerufen werden. Die von der Datenerfassungseinheit 38 sowie der Speichereinheit 46 bzw. dem zentralen Datenserver 48 bereitgestellten Informationen werden einem Bluetooth- oder RFID-Transponder 50 zugeführt, der eine Datenaustauschverbindung 52 mit dem Bluetooth- oder RFID-Empfänger 24 des landwirtschaftlichen Traktors 12 herstellt. Die Datenerfassungseinheit 36, 38 wird über eine von dem Bluetooth- oder RFID-Transponder 50 umfasste Antenne 54 von Seiten des Bluetooth- oder RFID-Empfängers 24 induktiv mit Strom versorgt. Alternativ ist diese mit einer gegebenenfalls austauschbaren (Lithium-) Batterie oder einem die Radbewegung nutzenden Generator ausgestattet.

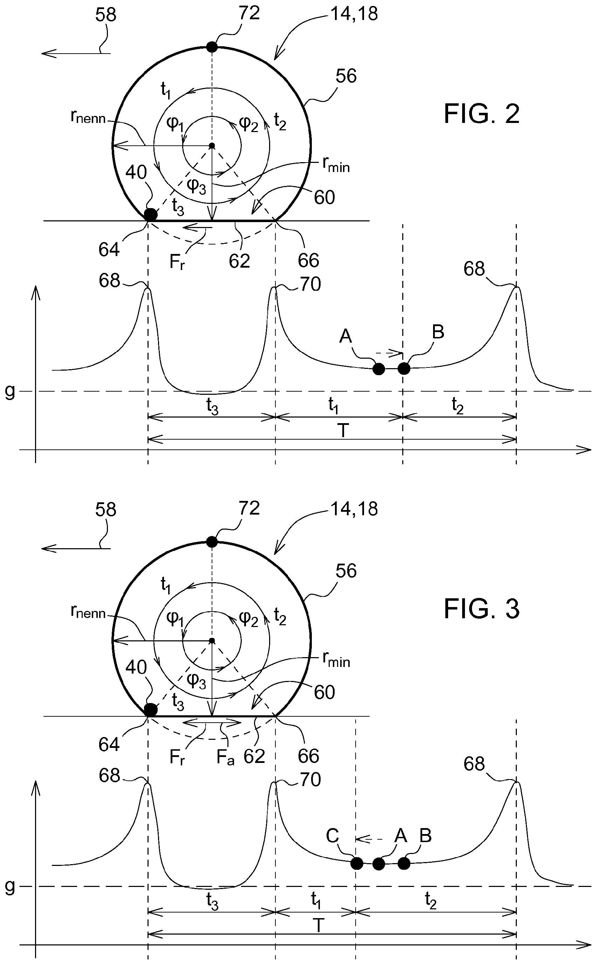

In Fig. 2 ist ferner ein an einem frei laufenden Rad auftretender Reifenlatsch veranschaulicht.

Im vorliegenden Fall ist unter dem Begriff "frei laufend" ein Rad zu verstehen, das frei von Antriebs- oder Bremskräften ist, bei dem der zugehörige Reifen also ausschließlich unter der Wirkung des beim Abrollen auftretenden Rollwiderstands steht.

Der dem Vorder- oder Hinterrad 14, 18 des landwirtschaftlichen Traktors 12 zugeordnete Reifen 56 weist einen Nennradius r = rₙₑₙₙ auf. Ausgehend von der Darstellung in Fig. 2 rotiert der Reifen 56 entgegen dem Uhrzeigersinn in Übereinstimmung mit der momentanen Fahrtrichtung 58 des landwirtschaftlichen Traktors 12. Unter der Wirkung der Radaufstandskräfte wird der Reifen 56 im Bereich einer Kontaktfläche 60 komprimiert. Diese Kontaktfläche 60 bildet den Reifenlatsch 62. Beim rotationsbedingten Durchlaufen des Reifenlatschs 62 verringert sich der Reifenradius r in einem Reifenlatscheintrittspunkt 64 bis auf einen minimalen Wert rₘᵢₙ, bevor dieser am Ende des Reifenlatschs 62 in einem Reifenlatschaustrittspunkt 66 wieder seinen ursprünglichen Nennradius rₙₑₙₙ annimmt.

Der im Reifenwulst 32, 34 eingebettete Beschleunigungsaufnehmer 40 ermittelt die dabei auftretenden Beschleunigungen in Form einer Reifenbeschleunigungsgröße. Beispielsgemäß charakterisiert die Reifenbeschleunigungsgröße eine von dem Beschleunigungsaufnehmer 40 erfasste radial wirkende Beschleunigung.

Ein typischer Verlauf der Reifenbeschleunigungsgröße relativ zur Erdbeschleunigung g über eine volle Radumdrehung mit der Periode T ist im Diagramm von Fig. 2 widergegeben. Demgemäß treten jeweils am Reifenlatscheintrittspunkt 64 und am Reifenlatschaustrittspunkt 44 ausgeprägte Beschleunigungsspitzen 68, 70 auf. Außerhalb des Reifenlatschs 62 durchläuft die Reifenbeschleunigungsgröße einen Beschleunigungsscheitelpunkt 72. Zwischen Reifenlatscheintrittspunkt 64, Reifenlatschaustrittspunkt 66 und Beschleunigungsscheitelpunkt 72 treten erste, zweite und dritte Zeitabstände t₁, t₂, t₃ bzw. Winkelabstände ϕ₁, ϕ₂, ϕ₃ auf.

In vollständig kraftfreiem Zustand des Reifens 56 ist der erste Zeitabstand t₁ bzw. Winkelabstand ϕ₁ zwischen dem Reifenlatscheintrittspunkt 64 und dem Beschleunigungsscheitelpunkt 72 mit dem zweiten Zeitabstand t₂ bzw. Winkelabstand ϕ₂ zwischen dem Beschleunigungsscheitelpunkt 72 und dem Reifenlatschaustrittspunkt 66 identisch. Der Beschleunigungsscheitelpunkt 72 weist dementsprechend eine mittige Position A zwischen den Beschleunigungsspitzen 69, 70 auf. Greift eine umfangsmäßig wirkende Kraft im Reifenlatsch 62 an, vorliegend eine sich aus dem Rollwiderstand des Reifens 56 ergebende Rollwiderstandskraft Fᵣ, so führt dies zu einer Symmetrieverschiebung zwischen den beiden Zeitabständen t₁, t₂ bzw. den beiden Winkelabständen ϕ₁, ϕ₂. Der Beschleunigungsscheitelpunkt 72 nimmt dann eine entgegen der momentanen Fahrtrichtung 58 versetzte Position B ein, t₁ > t₂ bzw. ϕ₁ > ϕ₂. Dies beruht auf dem Effekt der Rollwiderstandskraft Fᵣ, dem rotationsbedingten Durchlaufen des Reifenlatschs 62 retardierend entgegenzuwirken.

Fig. 3 veranschaulicht das Verhalten des Reifenlatschs unter der zusätzlichen Wirkung einer beschleunigenden Antriebskraft.

Die Antriebskraft Fₐ überlagert die Rollwiderstandskraft Fᵣ in entgegengesetzter Richtung, was gemäß dem Diagramm von Fig. 3 zu einer Rückverschiebung des Beschleunigungsscheitelpunkts 72 in eine Position C führt, t'₁ > t₁ > t₂ bzw. ϕ'₁ > ϕ₁ > ϕ₂. Wirkt hingegen eine (nicht dargestellte) verzögernde Bremskraft auf den Reifenlatsch 62 ein, so erfolgt die Verschiebung des Beschleunigungsscheitelpunkts 72 in entgegengesetzter Richtung.

Bei der am Reifen 56 auftretenden Antriebs- bzw. Bremskraft sowie der Rollwiderstandskraft handelt es sich um im Reifenlatsch 62 angreifende Reifenlängskräfte. Diese werden im Folgenden durch eine mittels des erfindungsmäßen Verfahrens zu ermittelnde Reifenlängskraftgröße charakterisiert.

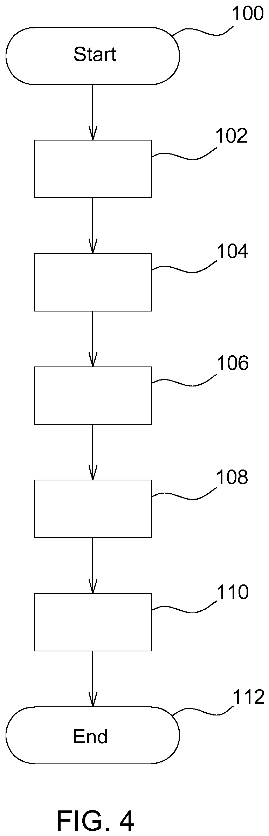

Fig. 4 zeigt ein Ausführungsbeispiel des erfindungsgemäßen Verfahrens in Gestalt eines Flussdiagramms.

Das in der Prozessoreinheit 20 ablaufende Verfahren wird in einem Initialisierungsschritt 100 bei Inbetriebnahme des landwirtschaftlichen Traktors 12 oder aber manuell über die Bedieneinheit 30 gestartet.

Daraufhin wird in einem ersten Hauptschritt 102 die Reifenbeschleunigungsgröße seitens des Beschleunigungsaufnehmers 40 über eine oder mehrere volle Radumdrehungen bzw. Perioden T ermittelt und von der Prozessoreinheit 20 zur Bestimmung des ersten Zeitabstands t₁ bzw. Winkelabstands ϕ₁ zwischen dem Reifenlatscheintrittspunkt 64 und dem Beschleunigungsscheitelpunkt 72 und des zweiten Zeitabstands t₂ bzw. Winkelabstands ϕ₂ zwischen dem Beschleunigungsscheitelpunkt 72 und dem Reifenlatschaustrittspunkt 66 ausgewertet. Reifenlatscheintrittspunkt 64 und Reifenlatschaustrittspunkt 66 sind hierbei in eindeutiger Weise durch die beiden Beschleunigungsspitzen 68, 70 gegeben (siehe hierzu Fig. 2 bzw. Fig. 3).

Um miteinander vergleichbare Werte für die Zeitabstände t₁, t₂ zu erhalten, werden diese von der Prozessoreinheit 20 unter Zugrundelegung einer sensorisch erfassten Raddrehzahl auf eine einheitliche Reifenumfangsgeschwindigkeit normiert. Eine derartige Normierung lässt sich bei Verwendung der Winkelabstände ϕ₁, ϕ₂ umgehen. Diese ergeben sich letztlich durch zeitliche Integration der mit der sensorisch erfassten Raddrehzahl korrelierenden Reifenumfangsgeschwindigkeit.

In einem zweiten Hauptschritt 104 wird von der Prozessoreinheit 20 eine zwischen den beiden Zeitabständen t₁, t₂ bzw. Winkelabständen ϕ₁, ϕ₂ auftretende Symmetrieverschiebung ermittelt. Dies erfolgt durch Bestimmung einer zwischen dem ersten und zweiten Zeitabstand t₁, t₂ bzw. Winkelabstand ϕ₁, ϕ₂ auftretenden Abweichung, t₁ - t₂ bzw. ϕ₁ - ϕ₂.

Auf Grundlage einer für den verwendeten Reifentyp spezifischen Zuordnungstabelle ermittelt die Prozessoreinheit 20 anschließend Betrag und/oder Richtung der Reifenlängskraftgröße, wobei in der Zuordnungstabelle eine Vielzahl vorgegebener Werte für die Symmetrieverschiebung empirisch mit jeweils korrespondierenden Werten für die Reifenlängskraftgröße verknüpft ist. Zur Verbesserung der Datenqualität wird die Zuordnungstabelle von der Prozessoreinheit 20 in Abhängigkeit von Informationen hinsichtlich des Fülldrucks des Reifens 56 und/oder der Reifentemperatur modifiziert. Die betreffenden Informationen werden seitens des Fülldrucksensors 42 bzw. des Temperatursens ors 44 über die Datenaustauschverbindung 52 der Prozessoreinheit 20 bereitgestellt.

Die solchermaßen ermittelte Reifenlängskraftgröße enthält im Allgemeinen sowohl Anteile hinsichtlich des Rollwiderstands als auch solche, die auf Antriebs- oder Bremskräfte des landwirtschaftlichen Traktors 12 zurückgehen. Um insofern eine eindeutige Zuordnung treffen zu können, wird zunächst zur Identifizierung des Rollwiderstands eine entsprechende Reifenrollwiderstandsgröße bestimmt. Dies erfolgt durch erneute Ermittlung der Reifenlängskraftgröße in einem dritten Hauptschritt 106, und zwar jedes Mal dann, wenn von der Prozessoreinheit 20 anhand des Betriebsstatus eines zugehörigen Antriebs- bzw. Bremssystems erkannt wird, dass sich der landwirtschaftliche Traktor 12 in einem antriebs- bzw. bremskraftfreien Fahrtzustand befindet. Auf diese Weise wird stets ein hinsichtlich der jeweiligen Untergrundbeschaffenheit aktueller Wert für die Reifenrollwiderstandsgröße zur Verfügung gestellt.

In einem vierten Hauptschritt 108 wird von der Prozessoreinheit 20 die bezüglich des durch die Reifenrollwiderstandsgröße wiedergegebenen Rollwiderstands bereinigte Reifenlängskraftgröße bereitgestellt. Ausgehend von dieser lässt sich ein unmittelbarer Schluss auf die auf den Reifen 56 wirkenden Antriebs- oder Bremskräfte ziehen.

Beispielhaft wird die Rollwiderstandsgröße wie auch die diesbezüglich bereinigte Reifenlängskraftgröße in einem fünften Hauptschritt 110 im Rahmen eines Antriebsmanagementsystems des landwirtschaftlichen Traktors 12 genutzt. Dieses kann unter anderem der Zugkraftoptimierung des landwirtschaftlichen Traktors 12 beim Pflügen oder dergleichen dienen.

Anschließend wird das erfindungsgemäße Verfahren in einem nachfolgenden Schlussschritt 112 beendet.

## Patentansprüche

1. Verfahren zur dynamischen Ermittlung einer Reifenlängskraft, bei dem mittels eines in einem Reifenwulst (32, 34) angeordneten Beschleunigungsaufnehmers (40) eine Reifenbeschleunigungsgröße ermittelt wird, die eine innerhalb des Reifenwulsts (32, 34) auftretende Beschleunigung charakterisiert, wobei ausgehend von der ermittelten Reifenbeschleunigungsgröße mittels einer Prozessoreinheit (20) ein erster Zeit- oder Winkelabstand (t₁, ϕ₁) zwischen einem Reifenlatscheintrittspunkt (64) und einem Beschleunigungsscheitelpunkt (72) und ein zweiter Zeit- oder Winkelabstand (t₂, ϕ₂) zwischen dem Beschleunigungsscheitelpunkt (72) und einem Reifenlatschaustrittspunkt (66) bestimmt wird, wobei von der Prozessoreinheit (20) aus einer zwischen den beiden Zeit- oder Winkelabständen (t₁, t₂, ϕ₁, ϕ₂) erfassten Symmetrieverschiebung auf Betrag und/oder Richtung einer eine Reifenlängskraft charakterisierenden Reifenlängskraftgröße geschlossen wird.

2. Verfahren nach Anspruch 1, **dadurch gekennzeichnet, dass** die Reifenlängskraftgröße von der Prozessoreinheit (20) auf Grundlage einer für einen verwendeten Reifentyp spezifischen Zuordnungstabelle ermittelt wird.

3. Verfahren nach Anspruch 2, **dadurch gekennzeichnet, dass** die Zuordnungstabelle von der Prozessoreinheit (20) in Abhängigkeit von Informationen hinsichtlich eines Fülldrucks des Reifens (56) und/oder einer Reifentemperatur modifiziert wird.

4. Verfahren nach wenigstens einem der Ansprüche 1 bis 3, **dadurch gekennzeichnet, dass** von der Prozessoreinheit (20) eine Rollwiderstandsgröße auf Grundlage einer in einem antriebs- oder bremskraftfreien Fahrtzustand ermittelten Reifenlängskraftgröße bestimmt wird.

5. Verfahren nach wenigstens einem der Ansprüche 1 bis 4, **dadurch gekennzeichnet, dass** die Reifenbeschleunigungsgröße von Seiten des Beschleunigungsaufnehmers (40) durch eine im Reifenlatsch (62) tangential oder radial wirkende Beschleunigung charakterisiert wird.

6. Verfahren nach wenigstens einem der Ansprüche 1 bis 4, **dadurch gekennzeichnet, dass** von der Prozessoreinheit (20) eine Variation einer Reifenumfangsgeschwindigkeit aufgrund einer beim rotationsbedingten Durchlaufen des Reifenlatschs (62) verursachten Radiusänderung ausgewertet und zur Charakterisierung der Reifenbeschleunigungsgröße herangezogen wird.

7. Verfahren nach wenigstens einem der Ansprüche 1 bis 6, **dadurch gekennzeichnet, dass** die Reifenbeschleunigungsgröße der Prozessoreinheit (20) seitens des Beschleunigungsaufnehmers (40) drahtlos zur Verfügung gestellt werden.

## Claims

1. Method for dynamically determining a tire longitudinal force, in which a tire acceleration variable is determined by means of an acceleration sensor (40) arranged in a tire bead (32, 34), said variable characterizing an acceleration occurring within the tire bead (32, 34), wherein, proceeding from the determined tire acceleration variable, a first time interval or angular distance (t₁, ϕ₁) between a tire contact patch entry point (64) and an acceleration vertex (72) and a second time interval or angular distance (t₂, ϕ₂) between the acceleration vertex (72) and a tire contact patch exit point (66) are determined by means of a processor unit (20), wherein the magnitude and/or direction of a tire longitudinal force variable characterizing a tire longitudinal force is deduced by the processor unit (20) from a symmetry shift detected between the two time intervals or angular distances (t₁, t₂, ϕ_{1,} ϕ₂).

2. Method according to Claim 1, **characterized in that** the tire longitudinal force variable is determined by the processor unit (20) on the basis of an assignment table specific to the type of tire used.

3. Method according to Claim 2, **characterized in that** the assignment table is modified by the processor unit (20) in accordance with information in respect of a filling pressure of the tire (56) and/or a tire temperature.

4. Method according to at least one of Claims 1 to 3, **characterized in that** a rolling resistance variable is determined by the processor unit (20) on the basis of a tire longitudinal force variable determined in a travel state free from driving force or braking force.

5. Method according to at least one of Claims 1 to 4, **characterized in that** the tire acceleration variable is **characterized by** the acceleration sensor (40) by means of an acceleration acting tangentially or radially in the tire contact patch (62).

6. Method according to at least one of Claims 1 to 4, **characterized in that** a variation in a tire circumferential speed due to a radius change caused during the rotationally induced passage through the tire contact patch (62) is evaluated by the processor unit (20) and used for characterizing the tire acceleration variable.

7. Method according to at least one of Claims 1 to 6, **characterized in that** the tire acceleration variable of the processor unit (20) are provided wirelessly by the acceleration sensor (40).

## Revendications

1. Procédé de détermination dynamique d'une force longitudinale de pneumatique, dans lequel une grandeur d'accélération de pneumatique est déterminée au moyen d'un capteur d'accélération (40) disposé dans un talon de pneumatique (32, 34), laquelle grandeur caractérise une accélération se produisant à l'intérieur du talon de pneumatique (32, 34), une première distance temporelle ou angulaire (t₁, ϕ₁) étant déterminée entre un point d'entrée d'aplatissement de pneumatique (64) et un pic d'accélération (72) et une deuxième distance temporelle ou angulaire (t₂, ϕ₂) étant déterminée entre le pic d'accélération (72) et le point de sortie d'aplatissement de pneumatique (66) au moyen d'une unité de traitement (20), l'unité de traitement (20) utilisant un décalage de symétrie détecté entre les deux distances temporelles ou angulaires (t₁, t₂, ϕ₁, ϕ₂) pour déterminer la valeur absolue et/ou la direction d'une grandeur de force longitudinale de pneumatique caractérisant une force longitudinale de pneumatique.

2. Procédé selon la revendication 1, **caractérisé en ce que** la grandeur de force longitudinale de pneumatique est déterminée par l'unité de traitement (20) à partir d'une table d'association spécifique à un type de pneumatique utilisé.

3. Procédé selon la revendication 2, **caractérisé en ce que** la table d'association est modifiée par l'unité de traitement (20) en fonction d'informations relatives à une pression de gonflage du pneumatique (56) et/ou à une température du pneumatique.

4. Procédé selon l'une au moins des revendications 1 à 3, **caractérisé en ce que** l'unité de traitement (20) détermine une grandeur de résistance au roulement à partir d'une grandeur de force longitudinale de pneumatique déterminée dans un état de roulement sans force d'entraînement ou de freinage.

5. Procédé selon l'une au moins des revendications 1 à 4, **caractérisé en ce que** la grandeur d'accélération de pneumatique est **caractérisée, par** le biais du capteur d'accélération (40), par une accélération agissant tangentiellement ou radialement dans l'aplatissement de pneumatique (62).

6. Procédé selon l'une au moins des revendications 1 à 4, **caractérisé en ce que** l'unité de traitement (20) évalue une variation d'une vitesse de pneumatique périphérique due à une variation de rayon causée par le passage, dû à la rotation, de l'aplatissement de pneumatique (62) et l'utilise pour caractériser la grandeur d'accélération de pneumatique.

7. Procédé selon l'une au moins des revendications 1 à 6, **caractérisé en ce que** la grandeur d'accélération de pneumatique est mise à disposition de l'unité de traitement (20) sans fil par le biais du capteur d'accélération (40).
